# EUROPÄISCHE PATENTSCHRIFT

(11) **EP 0 340 503 B1**
(45) Veröffentlichungstag und Bekanntmachung des Hinweises auf die Patenterteilung: **19.01.1994**
(21) Anmeldenummer: 89106671.4
(22) Anmeldetag: 14.04.1989
(51) Int. Cl.: D21G 1/02

(54) **Beheizbare Walze**
Heated roll
Rouleau chauffé

(30) Priorität: 02.05.1988 DE 3814794
(43) Veröffentlichungstag der Anmeldung: 08.11.1989
(73) Patentinhaber: Sulzer Papertec Krefeld GmbH, 47803 Krefeld (DE)
(72) Erfinder: Pav, Josef, Dr., D-4150 Krefeld (DE); Bresser, Hans, D-4173 Kerken 2 (DE); Wenzel, Reinhard, D-4150 Krefeld (DE); Vossmerbäumer, Rudolf, D-4150 Krefeld (DE)
(74) Vertreter: Knoblauch, Ulrich, Dr.-Ing.

(56) Entgegenhaltungen:
- DE-A- 3 340 683
- DE-A- 3 526 283
- GB-A- 2 143 302
- US-A- 4 821 384

## Beschreibung

Die Erfindung bezieht sich auf eine beheizbare Walze mit einem außen eine Arbeitsfläche aufweisenden Walzenmantel, dessen Innenraum an den Enden mit Einbauten versehen und von einem flüssigen Wärmeträger durchströmbar ist, wobei insbesondere der Walzenmantel von einem drehfesten Träger durchsetzt und auf ihm mittels hydrostatischer Lagerelemente abgestützt ist sowie mindestens ein Teil des Wärmeträgers den Lagerelementen als Druckmittel zuführbar ist.

Eine solche Walze ist aus DE-OS 35 26 283 bekannt. Sie dient der Behandlung von Warenbahnen und kann insbesondere in einem Kalander für Papier, Kunststoff o.dgl. eingesetzt werden. Der Walzenmantel ist auf einem ihn durchsetzenden Träger mittels hydrostatischer Lagerelemente abgestützt, mit deren Hilfe eine Biegeeinstellung des Walzenmantels möglich ist. Die den Lagerelementen unter Druck zugeführte Arbeitsflüssigkeit ist beheizt und dient gleichzeitig als Wärmeträger. Als Einbauten an den Walzenmantelenden sind je ein Wälzlager und axial weiter innen eine Doppeldichtung vorgesehen. Die nutzbare Arbeitsbreite, über die eine Gegenwalze anliegen kann, ist etwa gleich der Länge des vom Wärmeträger beaufschlagten Innenraums.

Bei hoch temperierten Walzen, bei denen der Wärmeträger beispielsweise auf Temperaturen von 250° bis 350° gebracht werden muß, ist nicht einmal diese Breite nutzbar, weil zu den Walzenenden hin ein erheblicher Temperaturabfall auftritt. Größere Arbeitsbreiten erforderten daher längere Walzen und zwangsläufig eine Vergrößerung des Abstandes der Stützlager dieser Walzen, was zu einer unerwünschten Verbreiterung der Maschinen führt. Denn häufig steht hierfür nicht der Platz zur Verfügung und außerdem ist die Deformationsregelung bei längeren Walzen schwieriger.

Der Erfindung liegt die Aufgabe zugrunde, eine beheizbare Walze der eingangs beschriebenen Art anzugeben, bei der sich ein besseres Verhältnis der nutzbaren Breite der Arbeitsfläche zur gesamten axialen Erstreckung der Walze ergibt.

Die Aufgabe wird erfindungsgemäß durch eine zusätzliche Heizvorrichtung für die die Einbauten übergreifenden Enden des Walzenmantels gelöst.

Mit dieser zusätzlichen Heizvorrichtung können die Enden des Walzenmantels auf einer höheren Temperatur als bisher gehalten werden. Der Wärmeabfluß vom bisher allein beheizten Mittelteil des Walzenmantels wird drastisch reduziert. Die gewünschte Temperatur der Walzenmanteloberfläche läßt sich auf einem größeren Teil ihrer axialen Länge aufrechterhalten. Bei einer gegebenen Walze ist eine größere Arbeitsbreite nutzbar; bei einer gegebenen Arbeitsbreite kann die Walze kürzer ausgeführt werden.

Insbesondere kann die Arbeitsfläche auch die Einbauten übergreifen und zwar vorzugsweise mindestens über 50 % ihrer axialen Erstreckung, im Extremfall sogar 100 %. Dies gibt eine ganz erhebliche Vergrößerung der axialen Erstreckung der Arbeitsfläche.

Für die Ausgestaltung der zusätzlichen Heizvorrichtung gibt es verschiedene Möglichkeiten. Bei einer Ausführungsform wird sie durch eine an der Außenseite des Walzenmantelendes angeordnte Induktionsheizvorrichtung gebildet. Beispielsweise kann ein mit Wechselstrom gespeister Elektromagnet Wirbelströme im Walzenmantelende induzieren, die zu der gewünschten Beheizung führen. Die Anbringung der Heizvorrichtung macht keine Schwierigkeiten, da in der Regel der Walzenmantel nur über einen Teil seines Umfangs von der Warenbahn belegt ist.

Besonders günstig es, daß zur Bildung der zusätzlichen Heizvorrichtung die Einbauten mindestens ein hydrostatisches Ringlager aufweisen, dessen Lagertaschen ein flüssiger Wärmeträger als Druckmittel zuführbar ist. Auf diese Weise wird das für den Betrieb des hydrostatischen Ringlagers erforderliche Druckmittel zur Beheizung der Walzenenden genutzt. Es können verhältnismäßig große Wärmemengen auf das Walzenenden übertragen werden.

Hierbei empfiehlt sich ein Pfad für den flüssigen Wärmeträger, der sich längs des Innenumfangs des Walzenmantels bzw. eines fest und wärmeleitend damit verbundenen Bauteils erstreckt. Auf diese Weise ist eine gute Wärmeübertragung zwischen Wärmeträger und Walzenmantel möglich.

Bei einer bevorzugten Ausführungsform ist das hydrostatische Ringlanger ein Radiallager mit einem Radiallagerring, dessen Lagertaschen aufweisende Lagerfläche am Innenumfang des Walzenmantels anliegt. Dies ergibt eine unmittelbare Beheizung des Walzenmantelendes.

Hierbei empfiehlt es sich, daß der Radiallagerring ein äußerer Lagerring ist, der über eine Kugelfläche auf einem innerem Lagerring abgestützt ist, und daß Verteilerkammern an der Kugelfläche über Radialkanäle im inneren Lagerring mit Zuflußleitungen im Träger und über drosselnde Radialkanäle im äußeren Lagerring mit den Lagertaschen verbunden sind. Dies ergibt eine freie Kippbeweglichkeit des Walzenmantelendes auf dem Träger und eine konstruktiv einfache Zufuhr des Wärmeträgers.

Stattdessen oder zusätzlich kann das hydrostatische Ringlager ein Axiallager sein, bei dem eine am Walzenmantel befestigte Ringscheibe zwischen zwei Axiallagerringen mit zueinander parallelen Lagertaschen aufweisenden Lagerflächen angeordnet ist. Auch hier wird die Wärme von den Lagertaschen auf das Walzenmantelende übertragen und zwar vermittels der Ringscheibe.

Eine noch bessere Wärmeübertragung ergibt sich, wenn an der Innenseite von Ringscheibe und Axiallagerringen ein Ringraum vorgesehen ist, der bis auf Verbindungskanäle, die zu Ringräumen an der Außenseite der Axiallagerringe führen, geschlossen ist. Denn auf diese Weise wird auch der flüssige Wärmeträger, der radial nach innen aus der Axiallagerfläche austritt, über die Verbindungskanäle zur Beaufschlagung des Walzenmantels geführt.

Insbesondere können die Verbindungskanäle durch zwischen den Lagertaschen angeordnete Radialnuten in der Lagerfläche gebildet sein. Dies ergibt eine sehr einfache Herstellung.

Desweiteren ist es günstig, daß zwei Stützringe die Axiallagerringe über eine Kugelfläche abstützen, eine den innenseitigen Ringraum begrenzende Wand zwischen sich aufnehmen und Kanäle zur Verbindung mit Zuflußleitungen im Träger aufweisen. Ein so ausgebildetes Axiallager erlaubt eine Kippbewegung des Walzenmantelendes um den Träger und eine einfache Herstellung.

Bei einer bevorzugten anderen Ausführungsform weist die zusätzliche Heizvorrichtung sich nur über die Endabschnitte des Walzenmantels erstreckende Heizkanäle auf, die von einem flüssigen Wärmeträger durchströmbar sind. Auch die nicht mehr dem Innenraum benachbarten Teile des Walzenmantels werden daher von einem Wärmeträger beheizt. Durch Wahl der Temperatur und der Durchströmgeschwindigkeit lassen sich die gewünschten Wärmemengen ohne weiteres auf die Walzenmantelenden übertragen.

Bei einer einfachen Ausführungsform sind die Heizkanäle zueinander parallel und in Umfangsrichtung nebeneinander angeordnet. Sie können durch Bohrungen im Walzenmantel gebildet sein. Eine andere Möglichkeit besteht darin, daß in die Enden des Walzenmantels ein Einsatz eingeführt ist und Nuten an der Berührungs-Umfangsfläche von Einsatz und Walzenmantel die Heizkanäle bilden. Solche Nuten lassen sich sehr einfach durch Fräsen eines im Vergleich zum Walzenmantel kleinen Einsatzes herstellen.

In weiterer Ausgestaltung der Erfindung ist eine Kreiselpumpe am Walzenmantel vorgesehen, die den Wärmeträger durch die Heizkanäle treibt. Ein solcher Zwangsantrieb stellt sicher, daß der Wärmeträger in den Heizkanälen nicht stagniert.

Vorzugsweise ist die Kreiselpumpe durch vom Innenraum ausgehende, etwa radial verlaufende Eingangskanäle gebildet, die mit zumindest einem Teil der Heizkanäle verbunden sind. Da die Eingangskanäle am Walzenmantel angebracht sind, treten in ihnen wegen der Radialkomponente bei der Rotation des Walzenmantels Zentrifugalkräfte auf, die zur Förderung des Wärmeträgers genutzt werden.

Bei einer Ausführungsform sind alle Heizkanäle mit einem etwa radial verlaufenden Eingangskanal versehen, während sich die Ausgänge der Heizkanäle im Bereich der Stirnseite des Walzenmantels befinden. An der Stirnseite kann der auströmende Wärmeträger leicht aufgefangen und abgeleitet werden.

Eine bevorzugte andere Ausführungsform sieht vor, daß je zwei benachbarte Heizkanäle nahe der Stirnseite des Walzenmantels miteinander verbunden sind, an ihrem anderen Ende etwa radial verlaufende Eingangs- und Ausgangskanäle einander benachbart sind und die Mündungen der Eingangskanäle radial weiter innen liegen als die Mündungen der Ausgangskanäle. Obwohl der Ausgangskanal dem zugehörigen Eingangskanal benachbart ist, bleibt der Kreiselpumpen-Effekt bestehen, weil eingangsseitig eine größere radiale Komponente vorhanden ist.

Desweiteren empfiehlt es sich, daß zur Speisung der Heizkanäle mit flüssigem Wärmeträger eine separate Speiseleitung mit einer Temperatur- und/oder Druckregelvorrichtung vorgesehen ist. Mit Hilfe dieser Regelvorrichtung läßt sich die zuzuführende Wärmemenge genau dosieren und festlegen.

Insbesondere kann dafür gesorgt sein, daß die separate Speiseleitung durch den Träger führt und in mindestens einer Düsenbohrung am Trägerumfang mündet und daß die Mündungen aller Eingangskanäle in einer Querschnittsebene liegen, die durch die mindestens eine Düsenbohrung bestimmt ist. Der unter Druck zugeführte Wärmerträger tritt als Strahl aus der Düsenbohrung aus und beaufschlagt eine Ringfläche, auf der die Mündungen der Eingangskanäle liegen. Jeder Eingangskanal wird daher mindestens einmal je Umdrehung direkt mit einem Strahlabschnitt versorgt, was auch dem Antrieb des Wärmeträgers durch die Heizkanäle dient.

Günstig ist es auch, daß die zusätzliche Heizvorrichtung sich nur über die Endabschnitte des Walzenmantels erstreckende Heizkanäle aufweist, die von einem flüssigen Wärme träger durchströmbar sind. Der Strahl aus der Düsenbohrung trifft abwechselnd in die Mündungen und auf die Umfangsfläche. Dort bildet sich eine Flüssigkeitsschicht, die wegen der Sperrwand nicht ablaufen kann. Aus dieser Flüssigkeitsschicht wird der Eingangskanal gespeist, solange er nicht vom Düsenstrahl beaufschlagt wird.

Zweckmäßigerweise liegen die Mündungen der Ausgangskanäle in einer Querschnittsebene, die axial gegenüber der mindestens einen Düsenbohrung versetzt ist. Diese Mündungen werden daher nicht vom Düsenstrahl getroffen. Aus ihnen kann der Wärmeträger frei in den Innenraum des Walzenmantels ablaufen.

Konstruktiv ist es von Vorteil, wenn der Einsatz am Außenumfang Axialnuten aufweist, von denen zumindest ein Teil am axial inneren Einsatzende mit einer Radialnut verbunden ist. Ein solcher Einsatz läßt sich leicht bearbeiten und bequem in den Walzenmantel einsetzen.

Die zusätzliche Heizvorrichtung ist besonders empfehlenswert, wenn zu den Einbauten je ein Lager, z.B. Wälzlager, gehört, auf dem ein Walzenmantelende gelagert ist, und den Lagern ein Schmiersystem zugeordnet ist, über das Schmiermittel mit geringerer Temperatur als der des Wärmeträgers zuführbar ist. Da ein Wärmeträger, wie Öl, seine Schmierfähigkeit verliert, wenn er auf 250° bis 350° gebracht wird, ist die separate Schmiermittelzufuhr häufig notwendig. Die geringe Temperatur gewährleistet auch, daß die Lager keine unzulässig hohen Temperaturen annehmen. Andererseits werden hierdurch aber die Walzenmantelenden zusätzlich gekühlt, was zu einer unerwünschten Verkleinerung der nutzbaren Arbeitsbreite führt. Durch entsprechende Wärmezufuhr mittels der zusätzlichen Heizvorrichtung läßt sich aber auch unter diesen Voraussetzungen ein großer, insbesondere bis über die Einbauten reichender Teil des Walzenmantels als Arbeitsfläche nutzen.

Vorzugsweise gehört zu den Einbauten eine Dichtvorrichtung, die den das Lager aufnehmenden Raum vom übrigen Innenraum des Walzenmantels abdichtet. Diese Dichtvorrichtung stellt sicher, daß sich das Schmiermittel und der Wärmeträger nicht miteinander vermischen. Sie können sich also in ihren Eigenschaften nicht gegenseitig negativ beeinflussen. Allerdings nimmt die axiale Erstreckung der Einbauten zu. Trotzdem ist wegen der zusätzlichen Heizvorrichtung keine Gefahr gegeben, daß dies einen negativen Einfluß auf die nutzbare Arbeitsbreite hat.

Insbesondere kann die Dichtvorrichtung eine doppelte Lippendichtung sein, von der die eine Lippe dem Lager und die andere Lippe dem übrigen Innenraum des Walzenmantels zugewandt ist. Dies ergibt eine besonders gute Trennung zwischen Schmiermittel und Wärmeträger.

Die Erfindung wird nachstehend anhand in der Zeichnung dargestellter, bevorzugter Ausführungsbeispiele näher erläutert. Es zeigen:
- Fig. 1: einen Teillängsschnitt durch eine erfindungsgemäße Walze mit zugehöriger Versorgung,
- Fig. 2: einen Teilquerschnitt längs der Linie A-A in Fig. 1,
- Fig. 3: einen Teilquerschnitt längs der Linie B-B in Fig. 1,
- Fig. 4: einen Teillängsschnitt durch eine andere Ausführungsform einer erfindungsgemäßen Walze,
- Fig. 5: einen Teilquerschnitt längs der Linie C-C der Fig. 4,
- Fig. 6: einen Teilquerschnitt längs der Linie D-D der Fig. 4,
- Fig. 7: einen Teillängsschnitt durch eine dritte Ausführungsform einer erfindungsgemäßen Walze,
- Fig. 8: einen Teilquerschnitt längs der Linie E-E der Fig. 7,
- Fig. 9: eine schematische räumliche Darstellung einer weiteren Ausführungsform einer erfindungsgemäßen Walze,
- Fig. 10: einen Teillängsschnitt durch eine weitere Ausführungsform einer erfindungsgemäßen Walze,
- Fig. 11: einen Teilquerschnitt längs der Linie F-F der Fig. 10, und
- Fig. 12: einen Teilquerschnitt längs der Linie G-G der Fig. 10.

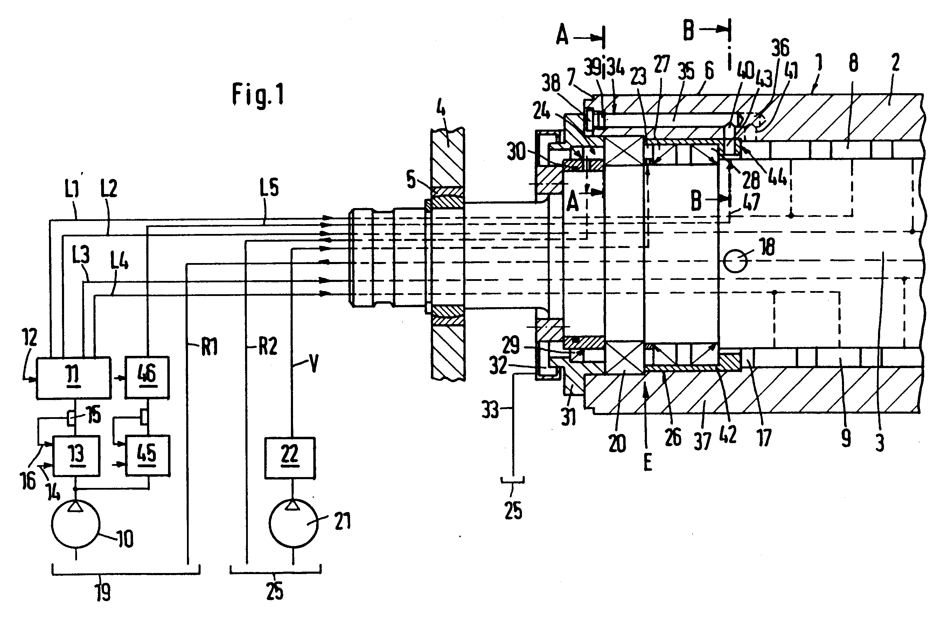

Die Walze 1 der Ausführungsform der Fig. 1 bis 3 besitzt einen Walzenmantel 2, der von einem feststehenden Träger 3 durchsetzt ist. Dieser ist im Maschinengestell 4 in sphärische Lagern 5 gehalten. Der Walzenmantel 2 besitzt eine sich über nahezu seine gesamte Breite erstreckende Arbeitsfläche 6, die seitlich durch Schultern 7 begrenzt ist. Die Walze 1 kann in üblicher Weise mit einer Gegenwalze zusammenwirken und mit ihr einen Walzenspalt bilden. Hierbei kann die gesamte Breite der Arbeitsfläche 6 ausgenutzt werden. Der Walzenmantel 2 ist auf dem Träger 3 durch hydrostatische Primär-Lagerelemente 8, die in Richtung eines Walzenspaltes wirken, und durch in Gegenrichtung wirkende hydrostatische Sekundär-Lagerelementen 9 abgestützt. Der Aufbau dieser Lagerelemente ergibt sich beispielsweise aus DE-OS 30 22 491. Die Lagerelemente 8 und 9 werden gruppenweise mit unter Druck stehender Arbeitsflüssigkeit versorgt, die von einer Pumpe 10 geliefert und in einer Ventilanordnung durch Druckminderung und Durchflußmengenregelung auf die gewünschten, über den Eingang 12 eingegebenen Werte gebracht wird. In der Zeichnung sind zwei Zuleitungen L1 und L2 für zwei Gruppen von Primär-Lagerelementen 8 und zwei Zuleitungen L3 und L4 für zwei Gruppen von Sekundär-Lagerelementen 9 veranschaulicht. Außerdem ist eine Heizvorrichtung 13 vorgsehen, welche in Abhängigkeit von einem am Eingang 14 eingestellten Sollwert und von einem mittels eines Fühlers 15 dem Eingang 16 zugeführten Istwert die Temperatur der Arbeitsflüssigkeit regelt. Die beheizte Arbeitsflüssigkeit tritt durch einen Spalt zwischen der Lagerfläche der einzelnen Lagerelemente 8, 9 und dem Innenumfang des Walzenmantels 2 in den Innenraum 17 des Walzenmantels aus. Dabei wird Warme an den Walzenmantel 2 abgegeben und dieser über die mit Lagerelementen besetzte Länge intensiv beheizt. Die Arbeitsflüssigkeit dient daher als Wärmeträger. Sie fließt aus dem Innenraum über Ablauföffnungen 18 und eine Rückleitung R1 in einen Behälter 19 ab.

Der Walzenmantel ist an beiden Enden über je ein Wälzlager 20 auf dem Träger 3 gelagert. Da die hoch beheizte Arbeitsflüssigkeit zur Schmierung dieser Wälzlager nicht geeignet ist, werden sie mit einer gesonderten Schmierflüssigkeit versorgt, welche von einer Pumpe 21 über eine Kühlvorrichtung 22 und eine Zuleitung V einer dem Wälzlager benachbarten Kammer 23 zugeführt und von einer auf der gegenüberliegenden Seite des Wälzlagers 20 angeordneten Kammer 24 über eine Rückleitung R2 in einen Behälter 25 abgeführt wird. Die Kammer 23 ist durch eine Dichtvorrichtung 26 vom Innenraum 17 des Walzenmantels 2 getrennt. Sie besteht aus zwei Lippendichtungen 27 und 28, deren Lippen dem Wälzlager 20 bzw. dem Innenraum 17 zugewandt sind. Die Kammer 24 ist durch eine Dichtung 29 gegenüber der Atmosphäre abgedichtet. Diese Dichtung befindet sich zwischen einem am Träger 3 befestigten Ring 30 und einem am Walzenmantel 2 befestigten Ring 31. Zur Abfuhr eventueller Leckflüssigkeiten ist ein Auffangraum 32 vorgesehen, der über eine Leitung 33 mit dem Behälter 25 verbunden ist.

Das Wälzlager 20 und die Dichtvorrichtung 26 stellen Einbauten E dar, die verhindern, daß die Walzenenden in gleicher Weise beheizt werden, wie der gesamte Mittelabschnitt über die Länge des Innenraums 17. Je höher die Temperatur der Arbeitsflüssigkeit und je geringer die Temperatur des Schmiermittels, um so stärker machte sich bisher Einfluß der Einbauten auf die erstrebte Gleichmäßigkeit der Walzentemperatur bemerkbar und um so grösser waren die Abschnitte der Walzenenden, die nicht mehr als nutzbare Arbeitsfläche verwendet werden konnten.

Erfindungsgemäß ist daher an den Walzenenden eine zusätzliche Heizvorrichtung 34 vorgesehen. Sie weist eine Vielzahl von achsparallelen Heizkanälen 35, 36 auf, die im Walzenmantel 2 vorgesehen sind und sich über den die Einbauten E aufnehmenden Endabschnitt 37 dieses Walzenmantels erstrecken. Die Heizkanäle sind als Bohrungen ausgebildet, die stirnseitig durch Stopfen 38 verschlossen sind. Nahe dieses Verschlußes sind jeweils zwei Heizkanäle 35, 36 durch einen Umfangskanalabschnitt 39 miteinander verbunden. Am axial inneren Ende besitzt der Heizkanal 35 einen radialen Eingangskanal 40 und der Heizkanal 36 einen radialen Ausgangskanal 41. Ein Einsatz 42 weist Verlängerungen 43 der Eingangskanäle 40 auf. Hierdurch wird eine Kreiselpumpe 44 gebildet, die durch Zentrifugalwirkung Arbeitflüssigkeit durch die hintereinander geschalteten Paare von Heizkanälen 35, 36 treibt.

Von der durch die Pumpe 10 geförderten Arbeitsflüssigkeit wird ein Teil abgezweigt, in einer Heizvorrichtung 45, die in ähnlicher Weise regelbar ist, wie die Heizvorrichtung 13, auf die gewünschte Temperatur gebracht, in einer Ventilvorrichtung 46 bezüglich Druck und Menge geregelt sowie über eine Zuleitung L5 als zusätzlicher Wärmeträger Düsenbohrungen 47 zugeführt. Die Düsenbohrungen münden am Trägerumfang in einer Querschnittsebene, in der sich die Eingangskanäle 40, 43 befinden. Infolgedessen treffen die Düsenstrahlen bei Rotation des Walzenmantels 2 in kurzen Abständen in die Eingangskanäle. Dies bewirkt ebenfalls einen Antrieb. Da Durchsatzmenge und Temperatur einstellbar ist, lassen sich beliebige Heizwirkungen erzielen.

Hierdurch wird erreicht, daß die Oberflächentemperatur des Walzenmantels 2 über einen erheblich größeren Teil seiner axialen Länge konstant gehalten werden kann. Das bedeutet, daß die durch einen Walzenspalt festgelegte maximale Arbeitsbreite des Walzenmantels sich über einen wesentlich größeren Teil der axialen Länge erstrecken kann als bisher. Insbesondere kann die Arbeitsbreite die Einbauten E etwas, zu einem erheblichen Teil, z.B. bis zur Mitte der Lager, oder die gesamte Axialerstreckung überlappen.

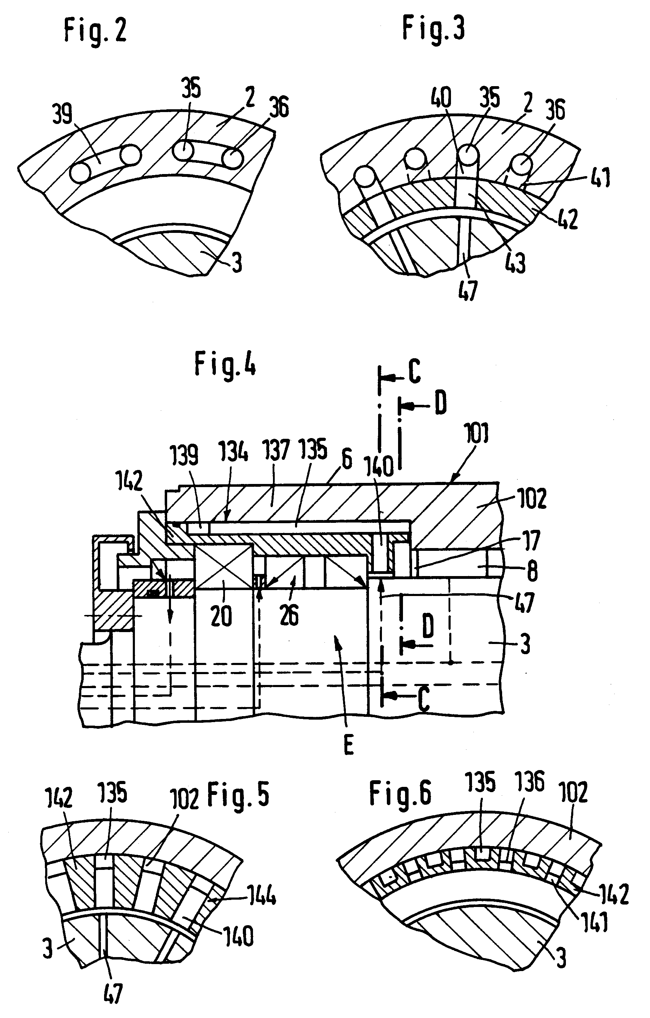

Bei der Ausführungsform der Fig. 4 bis 6 werden für gleiche Teile dieselben Bezugszeichen und für entsprechende Teile gegenüber Fig. 1 bis 3 um 100 erhöhte Bezugszeichen verwendet. Hier wird die zusätzliche Heizvorrichtung 134 im Endabschnitt 137 des Walzenmantels 102 durch Heizkanäle 135, 136 gebildet, die als Nuten in einem Einsatz 142 ausgebildet sind. Diese Nuten sind paarweise am stirnseitigen Ende durch Umfangskanalabschnitte 139 miteinander verbunden. Die Eingangskanäle 140 sind radial erheblich länger als die Ausgangskanäle 141, so daß sich wiederum eine Kreiselpumpe 144 ergibt. Auch hier werden die Eingangskanäle durch Düsenbohrungen 47 mit zusätzlichem Wärmeträger versorgt.

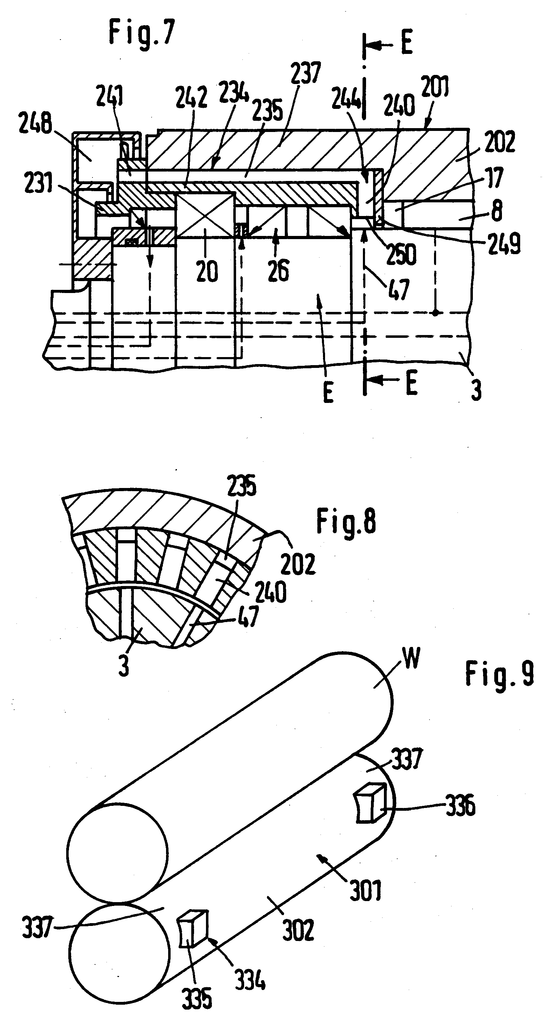

Bei der Ausführungsform nach den Fig. 7 und 8 werden für gleiche Teile dieselben und für entsprechende Teile gegenüber Fig. 1 bis 3 um 200 erhöhte Bezugszeichen verwendet. Die hier veranschaulichte zusätzliche Heizvorrichtung 234 weist im Endabschnitt 237 des Walzenmantels 202 Heizkanäle 235 in der Form von Axialnuten auf. Jede Axialnut ist am axial inneren Ende mit einer radialen Nut zur Bildung eines Eingangskanals 240 verbunden. Die Ausgangskanäle 241 befinden sich im Ring 231 und münden in einer Ableitkammer 248, die mit dem Behälter 19 verbunden ist.

Auch hier treffen die Düsenstrahlen aus den Düsenbohrungen 47 in die Eingangskanäle 240. Eine radial nach innen überstehende Sperrwand 249 sorgt dafür, daß über die Düsenbohrung 47 zugeführte Flüssigkeit, die nicht in den Eingangskanal 240, sondern auf die Ringfläche 250 zwischen diesen Mündungen trifft, nicht in den Innenraum 17 abfließt, sondern aufgrund der Zentrifugalwirkung im Mündungsbereich verbleibt und dann durch die Heizkanäle 235 abfließt.

Bei dem Ausführungsbeispiel der Fig. 9 arbeitet mit einer Gegenwalze W eine beheizbare Walze 301 zusammen, deren Innenaufbau demjenigen der Fig. 1 entsprechen kann, jedoch ohne die Flüssigkeits-Heizvorrichtung 34. Stattdessen ist eine Heizvorrichtung 334 vorgesehen, welche durch zwei Induktionsheizvorrichtungen 335, 336 in der Form von Elektromagneten gebildet wird. Die Elektromagnete befinden sich nur in den Endabschnitten 337 der Walze 301. Sie werden mit Wechselstrom versorgt und erzeugen durch Induktion Wirbelströme in diesen Endabschnitten 337 des aus Stahl bestehenden Walzenmantels 302. Auch auf die Weise lassen sich die Endabschnitte derart beheizen, daß eine große Arbeitsbreite nutzbar ist.

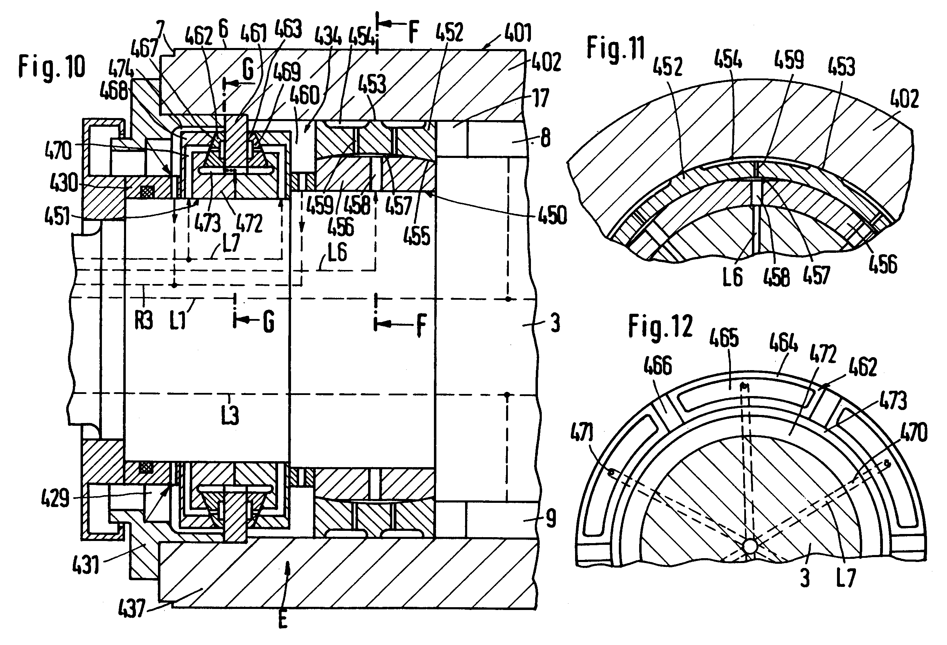

Bei der Ausführungsform der Fig. 10 bis 12 werden für gleiche Teile dieselben und für entsprechende Teile gegenüber Fig. 1 bis 3 um 400 erhöhte Bezugszeichen verwendet. Die zusätzliche Heizvorrichtung 434 besteht aus einem hydrostatischen Radiallager 450, das an beiden Walzenenden vorgesehen ist, und einem hydrostatischen Axiallager 451, das an einem Walzenende vorgesehen ist. Diesen hydrostatischen Ringlagern wird ein beheizter Wärmeträger über die Leitungen L6 und L7 im Träger 3 zugeführt.

Das hydrostatische Radiallager 450 weist einen Radiallagerring 452 auf, der eine Lagerfläche 453 mit Lagertaschen 454 am äußeren Umfang besitzt, die mit dem Innenumfang des Walzenmantels 402 zusammenwirken. Dieser Radiallagerring 452 bildet einen äußeren Lagerring, der über eine Kugelfläche 455 auf einem inneren Lagerring 456 abgestützt ist. Verteilerkammern 457 an der Kugelfläche 455 sind über Radialkanäle 458 im inneren Lagerring 456 mit der Zuleitung L6 und über drosselnde Radialkanäle 459 im äußeren Lagerring 452 mit den Lagertaschen 454 verbunden. Über die Zuleitung L6 zugeführte Druckflüssigkeit gelangt daher über die Lagertaschen und den Spalt zwischen Lagerfläche 453 und Mantel 402 unter Abgabe von Wärmeenergie an den Mantel einerseits in den Innenraum 17 und andererseits in den Abflußraum 460, von dem eine Rückflußleitung R3 abgeht. Es sind zwei Reihen von in Umfangsrichtung versetzten Lagertaschen 454 axial nebeneinander vorgesehen.

Das hydrostatische Axiallager 451 weist eine Ringscheibe 461 auf, die fest mit dem Walzenmantel 402 verbunden ist. Sie dreht sich zwischen zwei Axiallagerringen 462 und 463, die mittels zueinander paralleler Lagerflächen 464 an der Ringscheibe 461 anliegen. In der Lagerfläche sind sechs in Umfangsrichtung versetzte Lagertaschen 465 angeordnet, zwischen denen je eine Radialnut 466 verläuft. Die Axiallagerringe stützen sich über eine Kugelfläche 467 jeweils auf Stützringen 468 bzw. 469 ab. Diese werden von Kanälen 470 durchsetzt, die mit der Zuleitung L7 im Träger verbunden sind. Sie versorgen über Drosselbohrungen 471 in den Axiallagerringen 462 bzw. 463 die Lagertaschen 465. Die Stützringe 468 und 469 sind einstückig mit je einer Hälfte einer dazwischen befindlichen Begrenzungswand 472 verbunden. Diese schließt einen inneren Ringraum 473 ab, so daß dieser nur über die Radialnuten 466 mit äußeren Ringräumen 474 bzw. 460 verbunden ist, von der die Rücklaufleitung R3 abgeht. Demzufolge wird der beheizte Wärmeträger beim Austritt aus den Lagertaschen 465 an der Ringscheibe 461 und anschließend an der Innenumfangsfläche des Mantels 402 bzw. des wärmeleitend damit verbundenen Spannringes 431 entlang geleitet. Dies führt zu einem guten Wärmeübergang.

Von den veranschaulichten Ausführungsformen kann in vielerlei Hinsicht abgewichen werden. So kommen auch andere bekannte Heizeinrichtungen für die Beheizung der Enden des Walzenmantels in Betracht.

## Patentansprüche

1. Beheizbare Walze mit einem außen eine Arbeitsfläche aufweisenden Walzenmantel, dessen Innenraum an den Enden mit Einbauten versehen und von einem flüssigen Wärmeträger durchströmbar ist, wobei insbesondere der Walzenmantel von einem drehfesten Träger durchsetzt und auf ihm mittels hydrostatischer Lagerelemente abgestützt ist sowie mindestens ein Teil des Wärmeträgers den Lagerelementen als Druckmittel zuführbar ist, gekennzeichnet durch eine zusätzliche Heizvorrichtung (34; 134; 234; 334; 434) für die die Einbauten (E) übergreifenden Enden (37; 137; 237; 337; 437) des Walzenmantels (2; 102; 202; 302; 402).

2. Beheizbare Walze nach Anspruch 1, dadurch gekennzeichnet, daß die Arbeitsfläche (6) die Einbauten (E) mindestens über 50 % ihrer axialen Erstreckung übergreift.

3. Beheizbare Walze nach Anspruch 1 oder 2, dadurch gekennzeichnet, daß die zusätzliche Heizvorrichtung (334) eine an der Außenseite des Walzenmantelendes (337) angeordnete Induktionsheizvorrichtung (335, 336) aufweist.

4. Beheizbare Walze nach einem der Ansprüche 1 bis 3, dadurch gekennzeichnet, daß zur Bildung der zusätzlichen Heizvorrichtung (434) die Einbauten (E) mindestens ein hydrostatisches Ringlager (450, 451) aufweisen, dessen Lagertaschen (454; 465) ein flüssiger Wärmeträger als Druckmittel zuführbar ist.

5. Beheizbare Walze nach Anspruch 4, gekennzeichnet durch einen Pfad für den flüssigen Wärmeträger, der sich längs des Innenumfangs des Walzenmantels (402) bzw. eines fest und wärmeleitend damit verbundenen Bauteils (461; 431) erstreckt.

6. Beheizbare Walze nach Anspruch 4 oder 5, dadurch gekennzeichnet, daß das hydrostatische Ringlager (450) ein Radiallager mit einem Radiallagerring (452) ist, dessen Lagertaschen (454) aufweisende Lagerfläche (453) am Innenumfang des Walzenmantels (402) anliegt.

7. Beheizbare Walze nach Anspruch 6, dadurch gekennzeichnet, daß der Radiallagerring (452) ein äußerer Lagerring ist, der über eine Kugelfläche (455) auf einem innerem Lagerring (456) abgestützt ist, und daß Verteilerkammern (457) an der Kugelfläche über Radialkanäle (458) im inneren Lagerring mit Zuflußleitungen (L6) im Träger (3) und über drosselnde Radialkanäle (459) im äußeren Lagerring mit den Lagertaschen (454) verbunden sind.

8. Beheizbare Walze nach einem der Ansprüche 4 bis 7, dadurch gekennzeichnet, daß das hydrostatische Ringlager ein Axiallager (451) ist, bei dem eine am Walzenmantel (402) befestigte Ringscheibe (461) zwischen zwei Axiallagerringen (462, 463) mit zueinander parallelen, Lagertaschen (465) aufweisenden Lagerflächen (464) angeordnet ist.

9. Beheizbare Walze nach Anspruch 8, dadurch gekennzeichnet, daß an der Innenseite von Ringscheibe (461) und Axiallagerringen (462, 463) ein Ringraum (473) vorgesehen ist, der bis auf Verbindungskanäle (466), die zu Ringräumen (460, 474) an der Außenseite der Axiallagerringe führen, geschlossen ist.

10. Beheizbare Walze nach Anspruch 9, dadurch gekennzeichnet, daß die Verbindungskanäle (466) durch zwischen den Lagertaschen (465) angeordnete Radialnuten in der Lagerfläche (464) gebildet sind.

11. Beheizbare Walze nach einem der Ansprüche 8 bis 10, dadurch gekennzeichnet, daß zwei Stützringe (468, 469) die Axiallagerringe (462, 463) über eine Kugelfläche (467) abstützen, eine den innenseitigen Ringraum (473) begrenzende Wand (472) zwischen sich aufnehmen und Kanäle (470) zur Verbindung mit Zuflußleitungen (L7) im Träger (3) aufweisen.

12. Beheizbare Walze nach einem der Ansprüche 1 bis 3, dadurch gekennzeichnet, daß die zusätzliche Heizvorrichtung (34; 134; 234) sich nur über die Endabschnitte (37; 137; 237) des Walzenmantels erstreckende Heizkanäle (35, 36; 135, 136; 235) aufweist, die von einem flüssigen Wärmeträger durchströmbar sind.

13. Beheizbare Walze nach Anspruch 12, dadurch gekennzeichnet, daß die Heizkanäle (35, 36; 135, 136; 235) zueinander parallel und in Umfangsrichtung nebeneinander angeordnet sind.

14. Beheizbare Walze nach Anspruch 13, dadurch gekennzeichnet, daß die Heizkanäle (35, 36) durch Bohrungen im Walzenmantel (2) gebildet sind.

15. Beheizbare Walze nach Anspruch 13, dadurch gekennzeichnet, daß in die Enden des Walzenmantels (102; 202) ein Einsatz (142; 242) eingeführt ist und Nuten an der Berührungsumfangsfläche von Einsatz und Walzenmantel die Heizkanäle (135, 136; 235) bilden.

16. Beheizbare Walze nach einem der Ansprüche 12 bis 15, gekennzeichnet durch eine Kreiselpumpe (44; 144; 244) am Walzenmantel (2; 102; 202) die den Wärmeträger durch die Heizkanäle (35, 36; 135, 136; 235) treibt.

17. Beheizbare Walze nach Anspruch 16, dadurch gekennzeichnet, daß die Kreiselpumpe (44; 144; 244) durch vom Innenraum (17) ausgehende, etwa radial verlaufende Eingangskanäle (40, 43; 140; 240) gebildet ist, die mit zumindest einen Teil der Heizkanäle (35; 135; 235) verbunden sind.

18. Beheizbare Walze nach einem der Ansprüche 12 bis 17, dadurch gekennzeichnet, daß alle Heizkanäle (235) mit einem etwa radial verlaufenden Eingangskanal (240) versehen sind, während sich die Ausgänge (241) der Heizkanäle im Bereich der Stirnseite des Walzenmantels (201) befinden.

19. Beheizbare Walze nach einem der Ansprüche 12 bis 18, dadurch gekennzeichnet, daß je zwei benachbarte Heizkanäle (35, 36; 135, 136) nahe der Stirnseite des Walzenmantels (2; 102) miteinander verbunden sind, an ihrem anderen Ende etwa radial verlaufende Eingangs- und Ausgangskanäle (40, 41; 140; 141) einander benachbart sind und die Mündungen der Eingangskanäle radial weiter innen liegen als die Mündungen der Ausgangskanäle.

20. Beheizbare Walze nach einem der Ansprüche 5 bis 19, dadurch gekennzeichnet, daß zur Speisung der zusätzlichen Heizvorrichtung (34; 134; 234; 434) mit flüssigem Wärmeträger eine separate Speiseleitung (L5; L6, L7) mit einer Temperatur- und/oder Druckregelvorrichtung (45, 46) vorgesehen ist.

21. Beheizbare Walze nach Anspruch 20, dadurch gekennzeichnet, daß die separate Speiseleitung (L5) durch den Träger (3) führt und in mindestens einer Düsenbohrung (47) am Trägerumfang mündet und daß die Mündungen aller Eingangskanäle (40; 140; 240) in einer Querschnittsebene liegen, die durch die mindestens eine Düsenbohrung bestimmt ist.

22. Beheizbare Walze nach Anspruch 21, dadurch gekennzeichnet, daß alle Eingangskanäle (240) von einer gegenüber dem Innenumfang des Walzenmantels (202) nach innen vorstehenden Umfangsfläche (250) ausgehen, die durch eine Sperrwand (249) gegenüber dem übrigen Innenraum (17) des Walzenmantels abgegrenzt ist.

23. Beheizbare Walze nach einem der Ansprüche 19 bis 22, dadurch gekennzeichnet, daß die Mündungen der Ausgangskanäle (41; 141) in einer Querschnittsebene liegen, die axial gegenüber der mindestens einen Düsenbohrung (47) versetzt ist.

24. Beheizbare Walze nach einem der Ansprüche 14 bis 23, dadurch gekennzeichnet, daß der Einsatz (142; 242) am Außenumfang Axialnuten (135, 136; 235) aufweist, von denen zumindest ein Teil am axial inneren Einsatzende mit einer Radialnut (141; 240) verbunden ist.

25. Beheizbare Walze nach einem der Ansprüche 1 bis 3 und 12 bis 24, dadurch gekennzeichnet, daß zu den Einbauten (E) je ein Lager (20) gehört, auf dem ein Walzenmantelende (37; 137; 237) gelagert ist, und daß dem Lager ein Schmiersystem zugeordnet ist, über das Schmiermittel mit geringerer Temperatur als der des Wärmeträgers zuführbar ist.

26. Beheizbare Walze nach Anspruch 25, dadurch gekennzeichnet, daß zu den Einbauten (E) eine Dichtvorrichtung (26) gehört, die den das Lager (20) aufnehmenden Raum vom übrigen Innenraum (17) des Walzenmantels (2) abdichtet.

27. Beheizbare Walze nach Anspruch 26, dadurch gekennzeichnet, daß die Dichtvorrichtung (26) eine doppelte Lippendichtung ist, von der die eine Lippe dem Lager (20) und die andere Lippe dem übrigen Innenraum (17) des Walzenmantels zugewandt ist.

## Claims

1. Heated roll comprising a roll shell having an external working surface, the inner space of which is provided at its ends with inserts and can be traversed by a liquid heat carrier, in which in particular the roll shell is traversed by a rigid carrier and is supported on the latter by means of hydrostatic bearing elements and at least part of the heat carrier can be conveyed to the bearing elements as a pressure medium, characterised by an additional heating device (34; 134; 234; 334; 434) for the ends (37; 137; 237; 337; 437) of the roll shell (2; 102; 202; 302; 402) overlapping the inserts (E).

2. Heated roll according to claim 1, characterised in that the working surface (6) overlaps the inserts (E) over at least 50 % of their axial extent.

3. Heated roll according to claim 1 or claim 2, characterised in that the additional heating device (334) has an induction heating device (335, 336) arranged on the outer face of the roll shell end (337).

4. Heated roll according to one of claims 1 to 3, characterised in that, in order to form the additional heating device (434), the inserts (E) have at least one hydrostatic annular bearing (450, 451), to the bearing pockets (454; 465) of which a liquid heat carrier can be conveyed as a pressure medium.

5. Heated roll according to claim 4, characterised by a path for the liquid heat carrier extending along the inner circumference of the roll shell (402) or a component (461; 431) fixedly connected thereto in a heat-conductive manner.

6. Heated roll according to claim 4 or claim 5, characterised in that the hydrostatic annular bearing (450) is a radial bearing with a radial bearing ring (452), the bearing surface (453) of which having bearing pockets (454) bears against the inner circumference of the roll shell (402).

7. Heated roll according to claim 6, characterised in that the radial bearing ring (452) is an outer bearing ring which is supported via a spherical surface (455) on an inner bearing ring (456) and that distributing chambers (457) on the spherical surface are connected via radial channels (458) in the inner bearing ring to supply lines (L6) in the carrier (3) and via throttling radial channels (459) in the outer bearing ring to the bearing pockets (454).

8. Heated roll according to one of claims 4 to 7, characterised in that the hydrostatic annular bearing is an axial bearing (451), in which an annular disc (461) secured to the roll shell (402) is arranged between two axial bearing rings (462, 463) with parallel bearing surfaces (464) having bearing pockets (465).

9. Heated roll according to claim 8, characterised in that an annular space (473) is provided on the inner faces of the annular disc (461) and the axial bearing rings (462, 463), this annular space being sealed up to connecting channels (466) which lead to annular spaces (460, 474) on the outer faces of the axial bearing rings.

10. Heated roll according to claim 9, characterised in that the connecting channels (466) are formed by radial grooves in the bearing surface (464) arranged between the bearing pockets (465).

11. Heated roll according to one of claims 8 to 10, characterised in that two supporting rings (468, 469) support the axial bearing rings (462, 463) via a spherical surface (467), receive between them a wall (472) defining the interior annular space (473) and have channels (470) for connection to supply lines (L7) in the carrier (3).

12. Heated roll according to one of claims 1 to 3, characterised in that the additional heating device (34; 134; 234) has heating channels (35, 36; 135, 136; 235) which extend over only the end portions (37; 137; 237) of the roll shell and can be traversed by a liquid heat carrier.

13. Heated roll according to claim 12, characterised in that the heating channels (35, 36; 135, 136; 235) are arranged in parallel alongside one another in the circumferential direction.

14. Heated roll according to claim 13, characterised in that the heating channels (35, 36) are formed by bores in the roll shell (2).

15. Heated roll according to claim 13, characterised in that an insert (142; 242) is inserted into the ends of the roll shell (102; 202) and grooves on the contacting circumferential surfaces of the insert and the roll shell form the heating channels (135, 136; 235).

16. Heated roll according to one of claims 12 to 15, characterised by a centrifugal pump (44; 144; 244) on the roll shell (2; 102; 202) which circulates the heat carrier through the heating channels (35, 36; 135, 136; 235).

17. Heated roll according to claim 16, characterised in that the centrifugal pump (44; 144; 244) is formed by input channels (40, 43; 140; 240) departing from the inner space (17) and extending in a substantially radial manner, these input channels being connected to at least part of the heating channels (35; 135; 235).

18. Heated roll according to one of claims 12 to 17, characterised in that all of the heating channels (235) are provided with a substantially radially extending input channel (240), while the outputs (241) of the heating channels are situated in the region of the end face of the roll shell (201).

19. Heated roll according to one of claims 12 to 18, characterised in that every two adjacent heating channels (35, 36; 135, 136) are connected to one another close to the end face of the roll shell (2; 102), substantially radially extending input and output channels (40, 41; 140, 141) are adjacent to one another at its other end and the openings of the input channels are situated radially further towards the interior than the openings of the output channels.

20. Heated roll according to one of claims 5 to 19, characterised in that a separate feed line (L5; L6, L7) with a temperature- and/or pressure-controlling device (45, 46) is provided to feed the liquid heat carrier to the additional heating device (34; 134; 234; 434).

21. Heated roll according to claim 20, characterised in that the separate feed line (L5) leads through the carrier (3) and opens into at least one nozzle bore (47) on the circumference of the carrier and that the openings of all of the input channels (40; 140; 240) are situated in one cross-sectional plane defined by the at least one nozzle bore.

22. Heated roll according to claim 21, characterised in that all of the input channels (240) depart from a circumferential surface (250) which projects inwardly with respect to the inner circumference of the roll shell (202) and is sealed off from the remainder of the inner space (17) of the roll shell by a partition (249).

23. Heated roll according to one of claims 19 to 22, characterised in that the openings of the output channels (41; 141) are situated in one cross-sectional plane which is offset axially with respect to the at least one nozzle bore (47).

24. Heated roll according to one of claims 14 to 23, characterised in that the insert (142; 242) has axial grooves (135, 136; 235) on its outer circumference, at least part of which is connected to a radial groove (141; 240) at the axially inner insert end.

25. Heated roll according to one of claims 1 to 3 and 12 to 24, characterised in that the inserts (E) each include a bearing (20) on which a roll shell end (37; 137; 237) is supported and that a lubricating system by means of which lubricant at a lower temperature than that of the heat carrier can be conveyed is associated with the bearings.

26. Heated roll according to claim 25, characterised in that the inserts (E) include a sealing device (26) which seals off the space receiving the bearing (20) from the remainder of the inner space (17) of the roll shell (2).

27. Heated roll according to claim 26, characterised in that the sealing device (26) is a twin lip seal, one lip of which is directed towards the bearing (20) and the other lip of which is directed towards the remainder of the inner space (17) of the roll shell.

## Revendications

1. Rouleau chauffé comportant une enveloppe de rouleau qui présente extérieurement une surface de travail, le volume intérieur de cette enveloppe étant muni d'éléments incorporés à ses extrémités et pouvant être parcouru par un fluide caloporteur, l'enveloppe de rouleau étant notamment traversée par un support non tournant et s'appuyant sur lui au moyen d'éléments d'appui hydrostatiques, au moins une partie du fluide caloporteur pouvant être envoyée aux éléments d'appui en tant que fluide de pression, caractérisé par un dispositif de chauffage supplémentaire (34 ; 134 ; 234 ; 334 ; 434) pour les extrémités (37 ; 137 ; 237 ; 337 ; 437) de l'enveloppe de rouleau (2 ; 102 ; 202 ; 302 ; 402) s'engageant sur les éléments incorporés (E).

2. Rouleau chauffé selon la revendication 1, caractérisé en ce que la surface de travail (6) s'engage sur les éléments incorporés (E) suivant au moins 50% de leur tension axiale.

3. Rouleau chauffé selon la revendication 1 ou la revendication 2, caractérisé en ce que le dispositif de chauffage supplémentaire (334) comporte un appareil de chauffage par induction (335, 336) disposé sur la surface extérieure de l'extrémité (337) de l'enveloppe de rouleau.

4. Rouleau chauffé selon l'une des revendications 1 à 3, caractérisé en ce que, pour constituer le dispositif de chauffage supplémentaire, les éléments incorporés comportent au moins un appui annulaire hydrostatique (450, 451) présentant des logements d'appui (454 ; 465) auxquels on peut envoyer un fluide caloporteur en tant que fluide de pression.

5. Rouleau chauffé selon la revendication 4, caractérisé par un trajet destiné au fluide caloporteur s'étendant le long de la surface latérale intérieure de l'enveloppe de rouleau (402) ainsi que, le cas échéant, le long d'un élément de construction (461 ; 431) assemblé solidairement avec elle en liaison de conduction de chaleur.

6. Rouleau chauffé selon la revendication 4 ou la revendication 5, caractérisé en ce que l'appui annulaire hydrostatique (450) est un palier comportant une couronne de palier radial (452) dont la surface d'appui (453), présentant des logements d'appui (454), s'applique sur la surface latérale intérieure de l'enveloppe de rouleau (402).

7. Rouleau chauffé selon la revendication 6, caractérisé en ce que la couronne de palier radial (452) est une couronne extérieure qui, par l'intermédiaire d'une surface sphérique (455), s'appuie sur une couronne de palier intérieure (456), et en ce que des chambres de distribution (457) de la surface sphérique sont en communication avec des conduites d'amenée (L6) du support (3) par l'intermédiaire de conduits radiaux (458) de la couronne intérieure et avec les logements d'appui (454) par l'intermédiaire de conduits radiaux d'étranglement (459) de la couronne extérieure.

8. Rouleau chauffé selon l'une des revendications 4 à 7, caractérisé en ce que l'appui annulaire hydrostatique est un palier de butée (451), dans lequel un disque annulaire (461) fixé sur l'enveloppe de rouleau (402) est disposé entre deux couronnes de palier de butée (462, 463) dont les surfaces d'appui (464), parallèles entre elles, présentent des logements d'appui (465).

9. Rouleau chauffé selon la revendication 8, caractérisé en ce qu'un volume annulaire (473) est prévu sur la surface intérieure du disque annulaire (461) et des couronnes de palier de butée (462, 463), ce volume étant fermé, à l'exception de conduits de liaison (466) qui vont à des volumes annulaires (460, 474) situés à l'extérieur des couronnes de palier de butée.

10. Rouleau chauffé selon la revendication 9, caractérisé en ce que les conduits de liaison (466) sont formés par des rainures radiales pratiquées dans la surface d'appui (464) entre les logements d'appui (465).

11. Rouleau chauffé selon l'une des revendications 8 à 10, caractérisé en ce que deux anneaux d'appui (468, 469) assurent l'appui des couronnes de palier de butée (462, 463) par l'intermédiaire d'une surface sphérique (467), maintiennent entre eux une paroi (472) limitant le volume annulaire (473) du côté intérieur et présentent des conduits (470) destinés à assurer la liaison avec des conduites d'amenée (L7) du support (3).

12. Rouleau chauffé selon l'une des revendications 1 à 3, caractérisé en ce que le dispositif de chauffage supplémentaire (34 ; 134 ; 234) comporte des conduits de chauffage (35, 36 ; 135, 136 ; 235) qui ne s'étendent que sur les parties d'extrémité (37 ; 137 ; 237) de l'enveloppe de rouleau, ces conduits pouvant être parcourus par un fluide caloporteur.

13. Rouleau chauffé selon la revendication 12, caractérisé en ce que les conduits de chauffage (35, 36 ; 135, 136 ; 235) sont disposés parallèlement entre eux et l'un à côté de l'autre en direction périphérique.

14. Rouleau chauffé selon la revendication 13, caractérisé en ce que les conduits de chauffage (35, 36) sont formés par des trous percés dans l'enveloppe de rouleau (2).

15. Rouleau chauffé selon la revendication 13, caractérisé en ce qu'une garniture (142 ; 242) est introduite dans les extrémités de l'enveloppe de rouleau (102 ; 202) et en ce que des rainures disposées dans la surface périphérique de contact entre la garniture et l'enveloppe de rouleau forment les conduits de chauffage (135, 136 ; 235).

16. Rouleau chauffé selon l'une des revendications 12 à 15, caractérisé par une pompe centrifuge (44 ; 144 ; 244) disposée sur l'enveloppe de rouleau (2 ; 102 ; 202), cette pompe faisant circuler le fluide caloporteur dans les conduits de chauffage (35, 36 ; 135, 136 ; 235).

17. Rouleau chauffé selon la revendication 16, caractérisé en ce que la pompe centrifuge (44 ; 144, 244) est constituée par des conduits d'entrée (40, 43 ; 140, 240) partant du volume intérieur et s'étendant de façon sensiblement radiale, ces conduits d'entrée étant reliés à au moins une parie des conduits de chauffage (35 ; 135 235).

18. Rouleau chauffé selon l'une des revendications 12 à 17, caractérisé en ce que tous les conduits de chauffage (235) sont munis d'un conduit d'entrée (240) s'étendant de façon sensiblement radiale, tandis que les sorties (241) des conduits de chauffage se trouvent dans la zone de la face frontale de l'enveloppe de rouleau (201).

19. Rouleau chauffé selon l'une des revendications 12 à 18, caractérisé en ce que deux conduits de chauffage voisins (35, 36 ; 135, 136) sont respectivement reliés entre eux à proximité de la face frontale de l'enveloppe de rouleau (2 ; 102), l'autre extrémité de ces conduits étant reliée à des conduits d'entrée et de sortie (40, 41 ; 140 ; 141) s'étendant de façon sensiblement radiale au voisinage l'un de l'autre, les embouchures des conduits d'entrée étant, en direction radiale, situées davantage vers l'intérieur que les embouchures des conduits de sortie.

20. Rouleau chauffé selon l'une des revendications 5 à 19, caractérisé en ce que pour alimenter le dispositif de chauffage supplémentaire (34 ; 134 ; 234 ; 434) en fluide caloporteur, il est prévu une conduite d'alimentation distincte (L5 ; L6, L7) munie d'un appareil de réglage de température et/ou de pression (45, 46).

21. Rouleau chauffé selon la revendication 20, caractérisé en ce que la conduite d'alimentation distincte (L5) passe dans le support (3) et débouche dans au moins un trou de buse (47) sur la surface latérale du support, et en ce que les embouchures de tous les conduits d'entrée (40 ; 140 ; 240) sont situées dans un plan de section transversale déterminé par le ou les trous de buse.

22. Rouleau chauffé selon la revendication 21, caractérisé en ce que tous les conduits d'entrée (240) partent d'une surface latérale (250) décalée vers l'intérieur par rapport à la surface latérale intérieure de l'enveloppe de rouleau (202), cette surface décalée étant séparée par une paroi de barrage (249) du reste du volume intérieur (17)de l'enveloppe de rouleau.

23. Rouleau chauffé selon l'une des revendications 19 à 22, caractérisé en ce que les embouchures des conduits de sortie (41 ; 141) sont situées dans un plan de section transversale décalé en direction axiale par rapport au ou aux trous de buse (47).

24. Rouleau chauffé selon l'une des revendications 14 à 23, caractérisé en ce que la garniture (142 ; 242) comporte sur sa périphérie des rainures (axiales (135, 136 ; 235), au moins une partie de ces rainures étant reliée à une rainure radiale (141 ; 240) à l'extrémité intérieure de la garniture en direction axiale.

25. Rouleau chauffé selon l'une des revendications 1 à 3 et 12 à 24, caractérisé en ce qu'un palier (20) appartient respectivement aux éléments incorporés (E), une extrémité (37 ; 137 ; 237) de l'enveloppe de rouleau étant montée sur ce palier, et en ce qu'à ce palier est associé un système de lubrification au moyen duquel on peut amener un lubrifiant à température plus faible que celle du fluide caloporteur.

26. Rouleau chauffé selon la revendication 25, caractérisé en ce que les éléments incorporés (E) comprennent un élément d'étanchéité (26) assurant l'étanchéité du volume recevant le palier (20) vis-à-vis du reste du volume intérieur (17) de l'enveloppe de rouleau.

27. Rouleau chauffé selon la revendication 26, caractérisé en ce que l'élément d'étanchéité (26) est un joint d'étanchéité à deux lèvres, une lèvre étant dirigée vers le palier (20) et l'autre lèvre étant dirigée vers le reste du volume intérieur (17) de l'enveloppe de rouleau.
